# EUROPÄISCHE PATENTSCHRIFT

(11) **EP 3 441 611 B1**
(45) Veröffentlichungstag und Bekanntmachung des Hinweises auf die Patenterteilung: **10.04.2024**
(21) Anmeldenummer: 18187442.1
(22) Anmeldetag: 06.08.2018
(51) Int. Cl.: F03D 80/30

(54) **ROTORBLATT EINER WINDENERGIEANLAGE UND VERFAHREN ZUM NACHRÜSTEN EINER BLITZSCHUTZ-EINRICHTUNG EINES ROTORBLATTS**
ROTOR BLADE OF A WIND TURBINE AND METHOD FOR RETROFITTING A LIGHTNING PROTECTION DEVICE OF A ROTOR BLADE
PALE DE ROTOR D'UNE ÉOLIENNE ET PROCÉDÉ DE MISE À NIVEAU D'UNE LAME DE ROTOR EN UN DISPOSITIF DE PROTECTION CONTRE LA FOUDRE

(30) Priorität: 07.08.2017 DE 102017007371
(43) Veröffentlichungstag der Anmeldung: 13.02.2019
(73) Patentinhaber: Siemens Gamesa Renewable Energy Service GmbH, 20097 Hamburg (DE)
(72) Erfinder: Flach, Christian, 24783 Österrönfeld (DE)
(74) Vertreter: Glawe, Delfs, Moll

(56) Entgegenhaltungen:
- EP-B1- 2 404 056
- WO-A1-2011/080177
- WO-A1-2016/165714
- CA-A1- 2 977 379
- CN-A- 105 604 812
- DE-A1-102005 051 537
- DE-A1-102009 003 405
- DE-B3-102006 055 751
- US-A1- 2009 246 025
- US-A1- 2012 020 791

## Beschreibung

Die Erfindung betrifft ein Verfahren zum Nachrüsten einer Blitzschutzeinrichtung eines Rotorblatts einer Windenergieanlage. Die Erfindung betrifft außerdem ein Rotorblatt einer Windenergieanlage.

Blitzschutzeinrichtungen von Windenergieanlagen umfassen regelmäßig an den Rotorblattspitzen angeordnete Blitzschutzrezeptoren, die dazu ausgelegt sind, auftreffende Blitze einzufangen. Die mit dem Blitz übertragene elektrische Ladung wird über eine elektrische Leiterstrecke abgeführt, die sich von dem Blattspitzenrezeptor bis zur Erde erstreckt. Der Blitz wird auf diese Weise über die Blitzschutzeinrichtung abgeleitet wird, ohne dass die Windenergieanlage Schaden nimmt.

Die elektrische Leiterstrecke umfasst ein Blitzschutzkabel, das elektrisch mit dem Blattspitzenrezeptor verbunden ist. Auch wenn das Blitzschutzkabel eine Isolierung aufweist, kann es vorkommen, dass ein Blitz nicht den Blattspitzenrezeptor trifft, sondern direkt in das Blitzschutzkabel einschlägt. Dies kann Schäden an dem Blitzschutzkabel und an benachbarten Bereichen des Rotorblatts verursachen.

Dokument US 2012/0020791 A1 behandelt eine Blitzschutzvorrichtung für ein Rotorblatt einer Windenergieanlage, wobei eine Rezeptorscheibe und einen Rezeptorblock aus einem elektrisch leitenden Material vorgesehen sind und wobei eine Hülle, eine Kappe und ein Rezeptorblockisolator eine Kammer bilden, wobei die Kammer mit einer elektrisch leitenden Schicht versehen ist, die von einem relativ stark dielektrischen Medium eingeschlossen ist, wodurch die in der Blitzschutzvorrichtung enthaltenen Teile elektrisch isoliert und gegen einen direkten Blitzeinschlag geschirmt sind.

Dokument WO 2016165714 A1 offenbart eine Blitzschutzvorrichtung für ein Rotorblatt einer Windenergieanlage, umfassend eine mit einem Blitzschutzkabel in Kontakt stehende Rezeptorbasis und einen Blitzschutzrezeptor, der mit einem Montagebolzen mit der Rezeptorbasis verbunden ist, wobei der Montagebolzen durch eine Isolierung vor Schäden durch Blitzeinschläge geschützt ist.

Der Erfindung liegt die Aufgabe zugrunde, ein Rotorblatt sowie ein Verfahren zum Nachrüsten einer Blitzschutzeinrichtung vorzustellen, mit denen das Risiko von Schäden durch Blitzeinschläge vermindert werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird ein Kabelabschnitt entlang der Erstreckung eines Blitzschutzkabels abisoliert. Ein Anschlussstück und ein Blitzschutzrezeptor werden an dem abisolierten Kabelabschnitt angebracht, so dass der Blitzschutzrezeptor elektrisch mit dem Blitzschutzkabel gekoppelt ist. Das Anschlussstück umfasst ein erstes Schalenteil und ein zweites Schalenteil, die vor der Montage separat voneinander vorliegen und die im montierten Zustand den abisolierten Kabelabschnitt zwischen sich einschließen.

Die Erfindung hat erkannt, dass auf diese Weise einzelne Abschnitte eines Blitzschutzkabels wirksam vor Schäden durch Blitzeinschläge geschützt werden können. Zeigt sich im Betrieb einer Windenergieanlage, dass ein bestimmter Abschnitt des Blitzschutzkabels besonders empfänglich für Blitzeinschläge ist, so kann der erfindungsgemäße Blitzschutzrezeptor nachträglich dort angebracht werden. Der Blitzschutzrezeptor zieht Blitzeinschläge an, so dass auch ein zu dem Anschlussstück benachbarter Bereich des Blitzschutzkabels vor Schäden durch Blitzeinschläge gesichert ist. Üblicherweise haben nur wenige Bereiche eines Blitzschutzkabels ein erhöhtes Risiko für Blitzeinschläge. Meist sind dies Bereiche, in denen das Kabel entweder nahe der Oberfläche geführt ist oder umgelenkt ist. Häufig kann durch einen einzigen nachgerüstet Blitzschutzrezeptor oder jedenfalls eine geringfügige Anzahl von Blitzschutzrezeptoren der Blitzschutz eines Rotorblatts erheblich verbessert werden.

Das Blitzschutzkabel kann sich im Inneren eines Rotorblatts der Windenergieanlage erstrecken. Ein Ende des Blitzschutzkabels kann mit einem Blattspitzen-Adapter verbunden sein. Als Blattspitzen-Adapter wird ein elektrisch leitendes Element bezeichnet, das im Bereich der Blattspitze auftreffende Blitze einfängt und in das Blitzschutzkabel einleitet. Ein anderes Ende des Blitzschutzkabels kann im Bereich der Blattwurzel angeordnet sein und elektrisch mit einem in der Rotornabe angeordneten Leiter gekoppelt sein. Wenn das Rotorblatt drehbar relativ zu der Rotornabe gelagert ist, ist eine elektrische Kopplung erforderlich, mit der das Lager überbrückt werden kann. Die elektrische Kopplung kann eine galvanische Kopplung sein, die sich beispielsweise über einen Schleifringkontakt erstrecken kann. Möglich ist auch eine elektrische Kopplung über eine Funkenstrecke. Bei einem Blitzeinschlag entsteht kurzfristig eine so hohe Spannung, dass sich eine Entladung über die Funkenstrecke hinweg aufbaut, über die große Stromstärken abgeleitet werden können.

Das Blitzschutzkabel kann mit einem Abstand zu einer Außenfläche des Rotorblatts geführt sein. Dies kann insbesondere für den Kabelabschnitt gelten, der im Rahmen des erfindungsgemäßen Verfahrens abisoliert wird. Beispielsweise kann dieser Kabelabschnitt entlang einer Innenfläche der Außenhaut des Rotorblatts geführt sein. Der Abstand zwischen dem Blitzschutzkabel und der Außenfläche des Rotorblatts ist dann so gering, dass eine gewisse Wahrscheinlichkeit für Blitzeinschläge durch die Außenhaut des Rotorblatts hindurch in das Blitzschutzkabel besteht.

Das Blitzschutzkabel kann einen elektrischen Leiter umfassen, beispielsweise in Form eines Kupferkabels, sowie eine den elektrischen Leiter umgebende isolierende Schicht. Abisolieren bedeutet, dass eine den elektrischen Leiter des Kabels umgebende isolierende Schicht geöffnet wird, so dass der elektrische Leiter zugänglich wird. Insbesondere ist es möglich, dass die isolierende Schicht in dem abisolierten Kabelabschnitt vollständig entfernt ist. Der abisolierte Kabelabschnitt kann sich beispielsweise über eine Länge zwischen 4 cm und 10 cm erstrecken. In den an den abisolierten Kabelabschnitt angrenzenden Bereichen bleibt die isolierende Schicht vorzugsweise unverändert.

Das Anschlussstück kann so gestaltet sein, dass seine Erstreckung entlang dem Blitzschutzkabel mindestens der Länge des abisolierten Kabelabschnitts entspricht. Dadurch kann das Anschlussstück so angeordnet werden, dass es den abisolierten Kabelabschnitt vollständig überdeckt. Vorzugsweise ist die Erstreckung des Anschlussstücks entlang dem Blitzschutzkabel um wenigstens 5 %, vorzugsweise wenigstens 10 %, weiter vorzugsweise wenigstens 20 % größer als die Länge des abisolierten Kabelabschnitts. Damit wird die Möglichkeit eröffnet, dass Anschlussstück so anzuordnen, dass sich eine Überlappung mit dem unversehrten Bereich der isolierenden Schicht ergibt.

Im montierten Zustand kann das Anschlussstück den abisolierten Kabelabschnitt in Umfangsrichtung vollständig umgeben. Auf diese Weise kann das Anschlussstück einen unerwünschten elektrischen Kontakt von dem elektrischen Leiter nach außen verhindern.

Das Anschlussstück umfasst ein erstes Schalenteil und ein zweites Schalenteil, die vor der Montage separat voneinander vorliegen und die im montierten Zustand miteinander verbunden sind. Im montierten Zustand schließen die beiden Schalenteile den abisolierten Kabelabschnitt zwischen sich ein. Dabei können die beiden Schalenteile gegeneinander und/oder gegen den abisolierten Kabelabschnitt gespannt sein.

Die Schalenteile können mit einer Spanneinrichtung gegeneinander gespannt werden. Die Spanneinrichtung kann beispielsweise einen oder mehrere Schraubbolzen umfassen, die durch jeweils eine Bohrung in einem der Schalenteile hindurch geführt sind, so dass dieses Schalenteil durch Anziehen des Schraubbolzens gegen das andere Schalenteil gespannt werden kann.

In einer Ausführungsform hat das Anschlussstück bezogen auf eine zu der Längsrichtung des abisolierten Kabelabschnitts parallele Ebene eine Kreisform. Der abisolierte Kabelabschnitt kann sich entlang einem Durchmesser der Kreisform erstrecken.

Das Anschlussstück kann einen Kern aus einem elektrisch leitenden Material, wie beispielsweise Messing oder Kupfer haben. Das elektrisch leitende Material kann im montierten Zustand des Anschlussstücks in einem direkten elektrischen Kontakt mit dem abisolierten Kabelabschnitt stehen. Insbesondere kann das elektrisch leitende Material über die gesamte Länge und/oder über den gesamten Umfang flächig auf dem abisolierten Kabelabschnitt aufliegen.

Das elektrisch leitende Material des Anschlussstücks kann mit einer elektrisch isolierenden Hülle umgeben sein. Damit können unerwünschte elektrische Kontakte von dem Anschlussstück nach außen vermieden werden.

Der Blitzschutzrezeptor kann im montierten Zustand mit dem Anschlussstück verbunden sein. Das Anschlussstück bildet dann im montierten Zustand die Verbindung zwischen dem Blitzschutzkabel und dem Blitzschutzrezeptor, so dass der Blitzschutzrezeptor mechanisch in Position gehalten wird und elektrisch mit dem Blitzschutzkabel gekoppelt ist. Die elektrische Kopplung zwischen dem Blitzschutzrezeptor und dem Blitzschutzkabel kann sich aus einem direkten elektrischen Kontakt zwischen dem Blitzschutzrezeptor und dem Blitzschutzkabel ergeben oder aus einem direkten elektrischen Kontakt, der sich von dem Blitzschutzkabel über das Anschlussstück zu dem Blitzschutzrezeptor erstreckt. Eine elektrische Kopplung in diesem Sinne kann auch ohne direkten elektrischen Kontakt vorliegen, beispielsweise wenn es einen Luftspalt zwischen zwei Komponenten gibt, der im Falle eines Blitzeinschlags durch eine Entladung überbrückt wird. Entscheidend für die elektrische Kopplung ist, dass die bei einem Blitzeinschlag in den Blitzschutzrezeptor eingeleiteten elektrischen Ladungen auf das Blitzschutzkabel übertragen werden können.

Der Blitzschutzrezeptor kann fest oder lösbar mit dem Anschlussstück verbunden sein. Bei einer lösbaren Verbindung wird in einer Variante des erfindungsgemäßen Verfahrens zuerst der Blitzschutzrezeptor mit dem Anschlussstück verbunden und dann das Anschlussstück an dem abisolierten Kabelabschnitt angebracht. In einer anderen Variante wird zuerst das Anschlussstück an dem abisolierten Kabelabschnitt angebracht und dann der Blitzschutzrezeptor mit dem Anschlussstück verbunden.

Die lösbare Verbindung zwischen dem Blitzschutzrezeptor und dem Anschlussstück kann eine Schraubverbindung sein. Die Schraubverbindung kann sich bezogen auf den abisolierten Kabelabschnitt in radialer Richtung erstrecken.

Der Blitzschutzrezeptor kann eine von außerhalb des Rotorblatts zugängliche Rezeptorfläche aufweisen. Der Blitzschutzrezeptor kann sich durch die Außenhaut des Rotorblatts hindurch erstrecken. Die Rezeptorfläche kann bündig mit der umgebenden Außenfläche des Rotorblatts abschließen. Möglich ist auch, dass die Rezeptorfläche gegenüber der umgebenden Außenfläche des Rotorblatts leicht vorspringt oder leicht zurückgesetzt ist. Trifft ein Blitz auf die Rezeptorfläche, so kann die elektrische Ladung in das Blitzschutzkabel eingeleitet werden, ohne dass die umgebende Außenhaut des Rotorblatts beschädigt wird.

Die Rezeptorfläche kann einen Durchmesser zwischen 1 cm und 5 cm, vorzugsweise zwischen 2 cm und 4 cm haben. Die Rezeptorfläche kann kreisförmig sein. In der Rezeptorfläche kann ein Angriffselement für ein Werkzeug ausgebildet sein. Das Angriffselement kann beispielsweise eine oder mehrere Bohrungen in der Rezeptorfläche umfassen, in die mit einem Schraubenschlüssel eingegriffen werden kann, um die Schraubverbindung zwischen dem Blitzschutzrezeptor und dem Anschlussstück anzuziehen bzw. zu lösen.

Der Blitzschutzrezeptor kann aus Edelstahl bestehen. Dies hat den Vorteil, dass eine den Witterungseinflüssen ausgesetzte Rezeptorfläche des Blitzschutzrezeptors nicht korrodiert. Die Rezeptorfläche kann in einem Abstand zwischen 1 m und 5 m zu der Blattspitze angeordnet sein.

Wenn das Blitzschutzkabel im Inneren des Rotorblatts geführt ist, ist ein direkter Zugriff auf das Blitzschutzkabel von außen nicht möglich. Das erfindungsgemäße Verfahren kann deswegen den Schritt umfassen, durch die Außenhaut des Rotorblatts hindurch einen Zugang zu dem Blitzschutzkabel zu schaffen. Die Zugangsöffnung in der Außenhaut ist vorzugsweise so bemessen, dass durch die Zugangsöffnung hindurch auf das Blitzschutzkabel zugegriffen werden kann, so dass ein Kabelabschnitt des Blitzschutzkabels abisoliert werden kann. Das erfindungsgemäße Verfahren kann also so durchgeführt werden, dass durch eine Zugangsöffnung in der Außenhaut des Rotorblatts hindurch auf das Blitzschutzkabel zugegriffen wird, um einen Abschnitt des Blitzschutzkabels abzuisolieren.

Die Zugangsöffnung in der Außenhaut kann so bemessen sein, dass das Anschlussstück oder ein Schalenteil des Anschlussstücks durch die Zugangsöffnung hindurch in den Innenraum des Rotorblatts eingeführt werden kann. Der Durchmesser der Zugangsöffnung kann beispielsweise zwischen 5 cm und 15 cm liegen. Die Zugangsöffnung kann im Querschnitt kreisförmig sein.

Da die Platzverhältnisse im Innenraum des Rotorblatts gelegentlich beengt sind, kann es von Vorteil sein eine erste Zugangsöffnung und eine zweite Zugangsöffnung in der Außenhaut des Rotorblatts zu schaffen, wobei die erste und die zweite Zugangsöffnung so angeordnet sind, dass das Blitzschutzkabel von zwei Seiten aus zugänglich wird. Es kann dann ein erstes Schalenteil des Anschlussstücks durch die erste Zugangsöffnung hindurch geführt werden und ein zweites Schalenteil des Anschlussstücks durch die zweite Zugangsöffnung hindurch geführt werden. Im Inneren des Rotorblatts können die beiden Schalenteile miteinander verbunden werden, so dass sie den abisolierten Kabelabschnitt zwischen sich einschlie-ßen.

Nach Anbringen des Anschlussstücks und des Blitzschutzrezeptors kann die Zugangsöffnung in der Außenhaut des Rotorblatts wieder verschlossen werden. Das Verschließen kann so erfolgen, dass die wiederhergestellte Außenhaut des Rotorblatts bündig mit einer Umfangsfläche des Blitzschutzrezeptors oder mit dem Umfang der Rezeptorfläche abschließt. Das Verschließen der Zugangsöffnung kann gemäß den Vorschriften des Blattherstellers erfolgen. Üblicherweise werden zum Verschließen der Zugangsöffnung mehrere Schichten aus einem faserverstärkten Material laminiert.

Das erfindungsgemäße Verfahren kann als Ertüchtigungsverfahren durchgeführt werden, bei dem ein unbeschädigtes Rotorblatt nachträglich (also nach Inbetriebnahme) mit einem zusätzlichen Blitzschutzrezeptor ausgestattet wird. Dies kann beispielsweise mit dem Ziel erfolgen, das Rotorblatt zu Übereinstimmung mit einer höherrangigen Blitzschutznorm zu bringen.

Möglich ist auch, dass erfindungsgemäße Verfahren als Reparaturverfahren durchzuführen. Ist es zu einem Blitzeinschlag in das Blitzschutzkabel gekommen, so sind in diesem Bereich regelmäßig sowohl die Außenhaut des Rotorblatts als auch das Blitzschutzkabel beschädigt, so dass eine Reparatur erforderlich ist. Bei klassischen Reparaturverfahren für Kabel wird an der Schadensstelle meist weiteres elektrisch leitendes Material hinzugefügt, um Schäden an dem Kabel auszubessern. Durch das zusätzliche elektrisch leitende Material wird jedoch die Wahrscheinlichkeit weiterer Blitzeinschläge an genau dieser Stelle erhöht. Durch Anwendung des erfindungsgemäßen Reparaturverfahrens werden Blitzeinschläge gezielt zu dem zusätzlichen Rezeptor gelenkt, so dass die elektrische Ladung ohne Schaden für das Rotorblatt abgeleitet werden kann.

Die Erfindung betrifft außerdem ein Rotorblatt einer Windenergieanlage, bei dem ein Anschlussstück und ein Blitzschutzrezeptor an einem abisolierten Kabelabschnitt eines Blitzschutzkabels angebracht sind, so dass der Blitzschutzrezeptor elektrisch mit dem Blitzschutzkabel gekoppelt ist, wobei der Blitzschutzrezeptor sich durch einen nachträglich verschlossenen Bereich in der Außenhaut des Rotorblatts hindurch erstreckt. Der nachträglich verschlossene Bereich der Außenhaut entsprich demjenigen Bereich, in dem beim Durchführen des Verfahrens eine Zugangsöffnung erzeugt wurde, um das Anschlussstück oder eine Komponente des Anschlussstücks in den Innenraum des Rotorblatts einführen zu können.

Das Rotorblatt kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Rotorblatts beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Windenergieanlage mit einem erfindungsgemäßen Rotorblatt;
- Fig. 2:: den Blattspitzen-Abschnitt eines erfindungsgemäßen Rotorblatts;
- Fig. 3:: ein erfindungsgemäßes Anschlussstück;
- Fig. 4:: eine Seitenansicht eines erfindungsgemäßen Blitzschutzrezeptors;
- Fig. 5:: einer Ansicht von oben auf den Blitzschutzrezeptor gemäß Fig. 4;
- Fig. 6:: eine schematische Darstellung des erfindungsgemäßen Reparaturverfahrens.

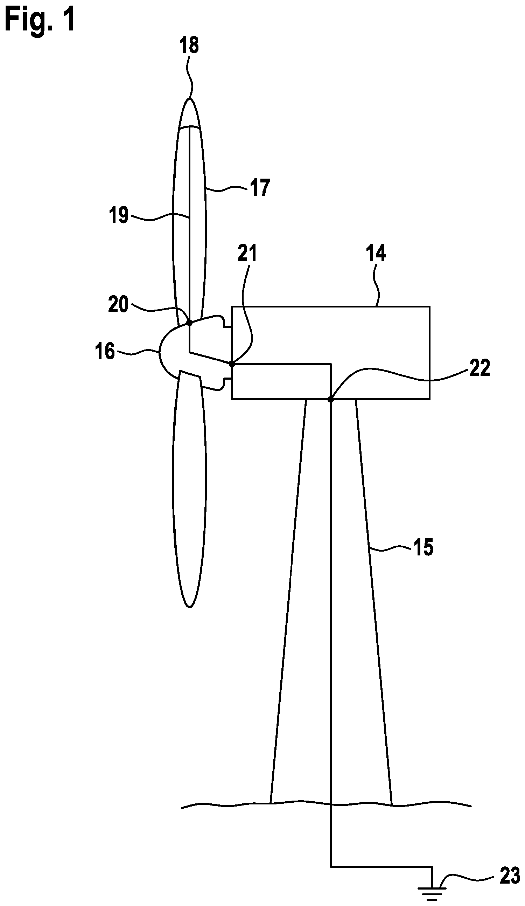

Bei einer in Fig. 1 gezeigten Windenergieanlage ist eine Gondel 14 drehbar auf einem Turm 15 gelagert. Die Gondel 14 trägt einen Rotor mit einer Rotornabe 16 und drei Rotorblättern 17. Der Rotor 16, 17 wird durch Wind in Drehung versetzt. Die Drehung wird über eine Rotorwelle und ein Getriebe zu einem Generator übertragen. Der Generator erzeugt elektrische Energie, die in ein Anschlussnetz eingespeist wird.

Jedes der Rotorblätter 17 ist mit einer Blitzschutzeinrichtung ausgestattet, die in Fig. 1 nur am Beispiel des nach oben weisenden Rotorblatts 17 dargestellt ist. Die Blattspitze des Rotorblatts 17 ist mit einem Blattspitzen-Rezeptor 18 aus einem metallischen Material ausgestattet. An den Blattspitzen-Rezeptor 18 ist ein Blitzschutzkabel 19 angeschlossen, das sich bis zur Wurzel des Rotorblatts 17 erstreckt. Am Übergang 20 zwischen dem Rotorblatt 17 und der Rotornabe 16, am Übergang 21 zwischen der Rotornabe 16 und der Gondel 14 sowie am Übergang 22 zwischen der Gondel 14 und dem Turm 15 treffen Komponenten der Windenergieanlage aufeinander, die im Betrieb der Windenergieanlage relativ zueinander bewegt werden. Im Bereich der Übergänge 20, 21, 22 werden Abschnitte des Blitzschutzkabels durch Schleifring-Kontakte und/oder Funkenstrecken elektrisch miteinander gekoppelt. Es ergibt sich auf diese Weise ein durchgehender Blitzableiter, der sich von dem Blattspitzen-Rezeptor 18 bis zur Erde 23 erstreckt.

Das Rotorblatt 17 ist aus einem elektrisch nicht leitenden Material aufgebaut, so dass Blitze in erster Linie zu dem Blattspitzen-Rezeptor 18 geleitet werden. Die mit dem Blitz übertragene elektrische Ladung wird von dem Blattspitzen-Rezeptor 18 über den Blitzableiter zur Erde 23 abgeleitet, ohne dass andere Komponenten der Windenergieanlage Schaden nehmen.

Gelegentlich kommt es vor, dass Blitze nicht den Blattspitzen-Rezeptor 18 treffen, sondern direkt das Blitzschutzkabel 19 finden. Der Blitz schlägt dann durch die Außenhaut des Rotorblatts 17 und die Isolierung des Blitzschutzkabels 19 hindurch, wodurch das Rotorblatt 17 beschädigt wird. Häufig stellt sich erst im Betrieb der Windenergieanlage raus, welche Abschnitte des Blitzschutzkabels 19 besonders anfällig für Blitzeinschläge sind. Mit dem erfindungsgemäßen Verfahren kann die Windenergieanlage nachgerüstet werden, so dass Schäden durch Blitzeinschläge in dem betreffenden Abschnitt des Blitzschutzkabels 19 vermieden werden.

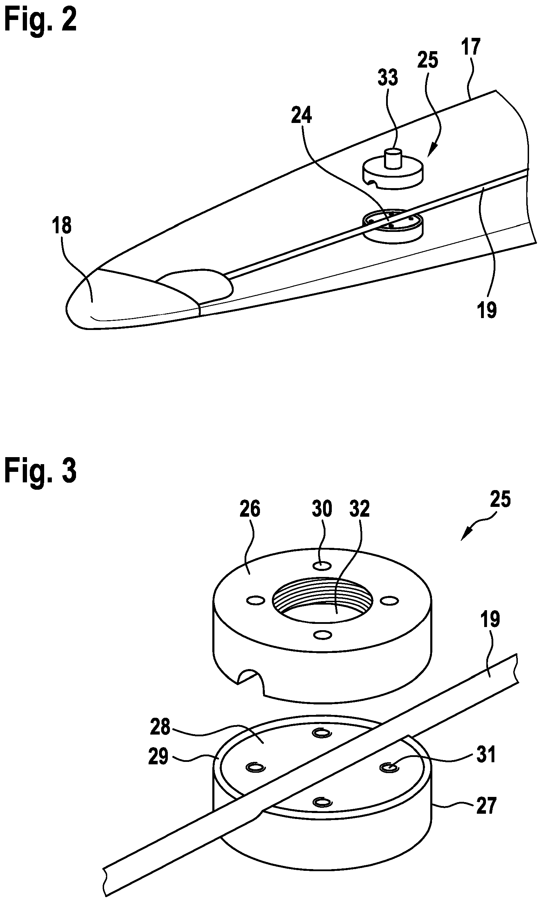

In Fig. 2 ist der zu der Blattspitze benachbarte Abschnitt des Rotorblatts 17 gezeigt. Das Blitzschutzkabel 19 hat einen Kabelabschnitt 24, der ein erhöhtes Risiko für Blitzeinschläge aufweist. Bei dem erfindungsgemäßen Verfahren wird der Kabelabschnitt 24 abisoliert. An dem abisolierten Kabelabschnitt 24 werden ein Anschlussstück 25 und ein zusätzlicher Blitzschutzrezeptor 33 angebracht. Blitze, die auf den Blitzschutzrezeptor 26 treffen, können in das Blitzschutzkabel 19 eingeleitet werden, ohne dass es zu Schäden an dem Rotorblatt 17 kommt.

Das Anschlussstück 25 umfasst gemäß Fig. 3 ein oberes Schalenteil 26 und ein unteres Schalenteil 27. Die beiden Schalenteile 26, 27 haben jeweils eine zu dem Blitzschutzkabel 19 passende Ausnehmung. Wenn die beiden Schalenteil 26, 27 zusammengesetzt sind, liegen die Ausnehmungen über den gesamten Umfang und die gesamte Länge des abisolierten Kabelabschnitts 24 flächig auf der Oberfläche des abisolierten Kabelabschnitts 24 auf.

Das Anschlussstück 25 hat einen Kern 28 aus einem elektrisch leitenden Material und eine elektrisch isolierende Umhüllung 29. Der elektrisch leitende Kern 28 hat direkten elektrischen Kontakt mit dem abisolierten Kabelabschnitts 24. Die isolierende Umhüllung schließt neben dem abisolierten Kabelabschnitts 24 mit der elektrisch isolierenden Schicht des Blitzschutzkabels 19 ab.

Die Verbindung der beiden Schalenteil 26, 27 miteinander erfolgt über vier Schraubbolzen. Das obere Schalenteil 26 umfasst vier Durchgangsbohrungen 30, die so angeordnet sind, dass sie nicht auf das Blitzschutzkabel 19 treffen. Das untere Schalenteil 27 hat vier dazu passende Sacklochbohrungen 31, die mit einem Innengewinde ausgestattet sind. Die Schraubbolzen werden durch die Durchgangsbohrungen 30 hindurch geführt und greifen in die Sacklochbohrungen 31 an. Durch Anziehen der Schraubbolzen werden die beiden Schalenteile 26, 27 miteinander verbunden, so dass sich ein einheitliches Anschlussstück 25 ergibt.

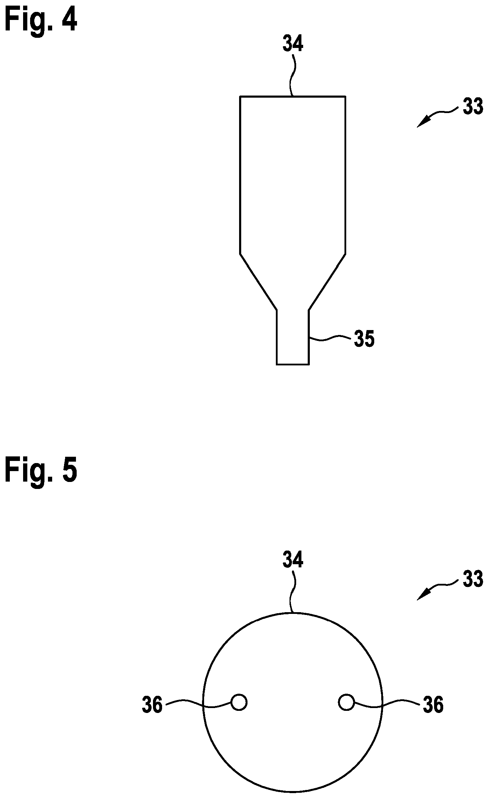

Das obere Schalenteil 26 umfasst ein Sackloch 32 von größerem Durchmesser, in dem ebenfalls ein Innengewinde ausgebildet ist. In das Sackloch 32 wird der Blitzschutzrezeptor 33 eingeschraubt, der in Fig. 4 in vergrößerter Darstellung gezeigt ist.

Der Blitzschutzrezeptor 33 besteht aus Edelstahl und erstreckt sich von einer Rezeptorfläche 34 zylinderförmig nach unten. Der zylinderförmige Abschnitt geht mit einem konischen Übergang in einen Schraubbolzen-Abschnitt 35 über. Der Schraubbolzen-Abschnitt 35 passt zu der Sackloch Bohrung 32 in dem oberen Schalenteil 26 des Anschlussstücks 25. In der Rezeptorfläche 34 sind zwei Bohrungen 36 ausgebildet, in die mit einem Schraubenschlüssel eingegriffen werden kann, um beim Einschrauben des Blitzschutzrezeptors 33 ein Drehmoment ausüben zu können.

Wenn der Blitzschutzrezeptor 33 in das Anschlussstück 25 eingeschraubt ist, ergibt sich ein direkter elektrischer Kontakt, der von der Rezeptorfläche 34 über das Anschlussstück 25 und den abisolierten Kabelabschnitt 24 in das Blitzschutzkabel 19 führt.

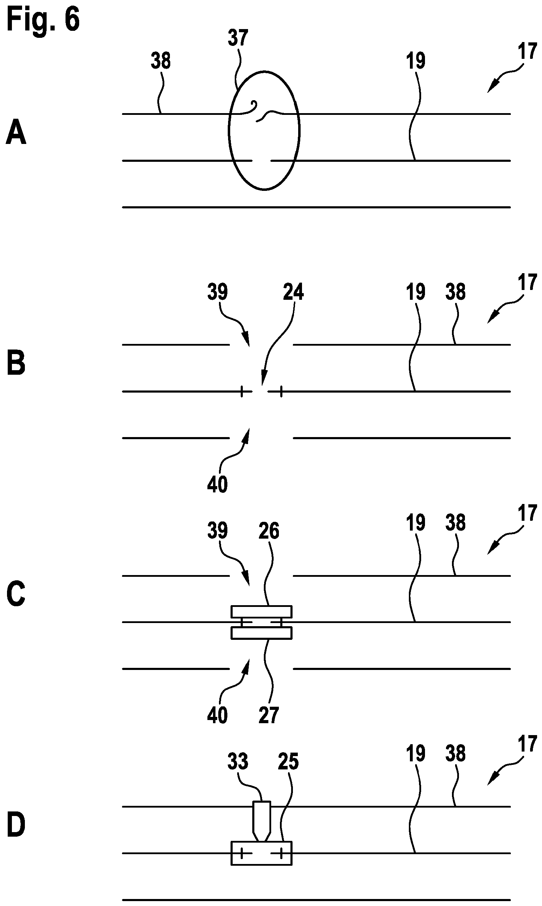

Den Ablauf des erfindungsgemäßen Reparaturverfahrens zeigt Fig. 6. Durch einen Blitzeinschlag ist es gemäß Figur 6A im Bereich 37 des Rotorblatts 17 zu einem Schaden in der Außenhaut 38 des Rotorblatts 17 und in dem Blitzschutzkabel 19 gekommen. Mit einem Lochschneider wird gemäß Figur 6B eine erste Zugangsöffnung 39 in der Außenhaut 38 des Rotorblatts 17 erzeugt. Die erste Zugangsöffnung 39 ist im Querschnitt kreisförmig und so angeordnet, dass das beschädigte Material der Außenhaut 38 vollständig entfernt ist. Durch die erste Zugangsöffnung 39 hindurch ist der beschädigte Abschnitt des Blitzschutzkabels 29 zugänglich. Die isolierende Schicht des Blitzschutzkabels 29 wird zu beiden Seiten der Schaltstelle auf einigen Zentimetern entfernt, so dass sich ein abisolierter Kabelabschnitt 24 ergibt.

Gegenüber der ersten Zugangsöffnung 39 wird eine zweite Zugangsöffnung 40 erzeugt, so dass der abisolierte Kabelabschnitt 24 von zwei Seiten aus zugänglich wird. Der Durchmesser der ersten Zugangsöffnung 39 ist etwas größer als der Durchmesser des oberen Schalenteils 26 des Anschlussstücks 25. der Durchmesser der zweiten Zugangsöffnung 40 ist etwas größer als der Durchmesser des unteren Schalenteils 27 des Anschlussstücks 25.

Gemäß Figur 6C wird das obere Schalenteil 26 durch die erste Zugangsöffnung 39 und das untere Schalenteil 27 durch die zweite Zugangsöffnung 40 in den Innenraum des Rotorblatts 17 eingeführt, so dass der abisolierte Kabelabschnitt 24 mit den Schalenteilen 26, 27 überdeckt wird.

Nach dem Verbinden der beiden Schalenteil 26, 27 miteinander ergibt sich gemäß Fig. 6 die ein fest mit dem Blitzschutzkabel 19 verbundenes Anschlussstück 25. Der Blitzschutzrezeptor 33 wird von oben in das Anschlussstück 25 eingeschraubt, so dass die Rezeptorfläche 34 nach außen weist und leicht gegenüber der Außenhaut 38 des Rotorblatts 17 vorspringt. Die beiden Zugangsöffnungen 39, 40 werden durch Laminieren wieder verschlossen. Bei der ersten Zugangsöffnung 39 schließt die reparierte Außenhaut 38 bündig mit einer Umfangsfläche des Blitzschutzrezeptors 33 ab.

Das Rotorblatt 17 ist in diesem Zustand wieder einsatzbereit. Das Risiko, dass es erneut zu einem Schaden durch einen Blitzeinschlag in diesem Bereich des Rotorblatts 17 kommt, ist vermindert.

## Patentansprüche

1. Verfahren zum Nachrüsten einer Blitzschutzeinrichtung eines Rotorblatts (17) einer Windenergieanlage, bei dem ein Kabelabschnitt (24) entlang der Erstreckung eines Blitzschutzkabels (19) abisoliert wird und bei dem ein Anschlussstück (25) und ein Blitzschutzrezeptor (33) an dem abisolierten Kabelabschnitt (24) angebracht werden, so dass der Blitzschutzrezeptor (33) elektrisch mit dem Blitzschutzkabel (19) gekoppelt ist, **dadurch gekennzeichnet, dass** das Anschlussstück (25) ein erstes Schalenteil (26) und ein zweites Schalenteil (27) umfasst, die vor der Montage separat voneinander vorliegen und die im montierten Zustand den abisolierten Kabelabschnitt (24) zwischen sich einschließen, dass das Anschlussstück so gestaltet ist, dass seine Erstreckung entlang dem Blitzschutzkabel mindestens der Länge des abisolierten Kabelabschnitts entspricht und dass das Anschlussstück so angeordnet wird, dass es den abisolierten Kabelabschnitt vollständig überdeckt.

2. Verfahren nach Anspruch 1, **dadurch gekennzeichnet, dass** das Blitzschutzkabel (19) sich im Inneren des Rotorblatts (17) erstreckt.

3. Verfahren nach Anspruch 1 oder 2, **dadurch gekennzeichnet, dass** der abisolierte Kabelabschnitt (24) sich über eine Länge zwischen 4 cm und 10 cm erstreckt.

4. Verfahren nach einem der Ansprüche 1 bis 3, **dadurch gekennzeichnet, dass** das Anschlussstück (25) sich entlang dem Blitzschubkabel (19) über eine Länge erstreckt, die um wenigstens 5 %, vorzugsweise wenigstens 10 %, weiter vorzugsweise wenigstens 20 % größer ist als die Länge des abisolierten Kabelabschnitts (24).

5. Verfahren nach einem der Ansprüche 1 bis 4, **dadurch gekennzeichnet, dass** das Anschlussstück (25) einen elektrisch leitenden Kern (28) und eine elektrisch isolierende Hülle (29) hat.

6. Verfahren nach einem der Ansprüche 1 bis 5, **dadurch gekennzeichnet, dass** der Blitzschutzrezeptor (33) durch eine Schraubverbindung mit dem Anschlussstück (25) verbunden wird.

7. Verfahren nach einem der Ansprüche 1 bis 6, **dadurch gekennzeichnet, dass** durch die Außenhaut (38) des Rotorblatts (17) hindurch eine erste Zugangsöffnung (39) zu dem Blitzschutzkabel (24) geschaffen wird.

8. Verfahren nach Anspruch 7, **dadurch gekennzeichnet, dass** durch die Außenhaut (38) des Rotorblatts (17) hindurch eine zweite Zugangsöffnung (40) zu dem Blitzschutzkabel (24) geschaffen wird, so dass das Blitzschutzkabel (24) von einer zweiten Seite aus zugänglich wird.

9. Verfahren nach Anspruch 7 oder 8, **dadurch gekennzeichnet, dass** die erste Zugangsöffnung (39) und/oder die zweite Zugangsöffnung (40) nach dem Anbringen des Anschlussstücks (25) und des Blitzschutzrezeptors (33) wieder verschlossen werden.

10. Verfahren nach Anspruch 9, **dadurch gekennzeichnet, dass** der Blitzschutzrezeptor (33) sich durch die wieder verschlossene Außenhaut (38) des Rotorblatts (17) hindurch erstreckt.

11. Verfahren nach einem der Ansprüche 1 bis 10, **dadurch gekennzeichnet, dass** das Verfahren als Reparaturverfahren durchgeführt wird.

12. Verfahren nach einem der Ansprüche 1 bis 10, **dadurch gekennzeichnet, dass** das Verfahren als Ertüchtigungsverfahren durchgeführt wird.

13. Rotorblatt einer Windenergieanlage, bei dem ein Anschlussstück (25) und ein Blitzschutzrezeptor (33) an einem abisolierten Kabelabschnitt (24) entlang der Erstreckung eines Blitzschutzkabels (19) angebracht sind, so dass der Blitzschutzrezeptor (33) elektrisch mit dem Blitzschutzkabel (19) gekoppelt ist, wobei der Blitzschutzrezeptor (33) sich durch einen nachträglich verschlossenen Bereich in der Außenhaut (38) des Rotorblatts (17) hindurch erstreckt, **dadurch gekennzeichnet, dass** das Anschlussstück (25) ein erstes Schalenteil (26) und ein zweites Schalenteil (27) umfasst, die vor der Montage separat voneinander vorliegen und die im montierten Zustand den abisolierten Kabelabschnitt (24) zwischen sich einschließen, dass das Anschlussstück so gestaltet ist, dass seine Erstreckung entlang dem Blitzschutzkabel mindestens der Länge des abisolierten Kabelabschnitts entspricht und dass das Anschlussstück so angeordnet ist, dass es den abisolierten Kabelabschnitt vollständig überdeckt.

## Claims

1. A method for retrofitting a lightning protection device of a rotor blade (17) of a wind turbine, in which method a cable section (24) is stripped of insulation along the extent of a lightning protection cable (19), and in which method a connection piece (25) and a lightning protection receptor (33) are fitted to the cable section (24) which is stripped of insulation, so that the lightning protection receptor (33) is electrically coupled to the lightning protection cable (19), **characterized in that** the connection piece (25) comprises a first shell part (26) and a second shell part (27), which shell parts are separate from one another before assembly and enclose the cable section (24) which is stripped of insulation between them in the assembled state, that the connection piece is configured such that its extent along the lightning protection cable corresponds at least to the length of the cable section which is stripped of insulation, and that the connection piece is arranged such that it completely covers the cable section which is stripped of insulation.

2. The method as claimed in claim 1, wherein the lightning protection cable (19) extends in the interior of the rotor blade (17).

3. The method as claimed in claim 1 or 2, wherein the cable section (24) which is stripped of insulation extends over a length of between 4 cm and 10 cm.

4. The method as claimed in one of claims 1 to 3, wherein the connection piece (25) extends along the lightning protection cable (19) over a length which is at least 5%, preferably at least 10%, further preferably at least 20%, greater than the length of the cable section (24) which is stripped of insulation.

5. The method as claimed in one of claims 1 to 4, wherein the connection piece (25) has an electrically conductive core (28) and an electrically insulating casing (29).

6. The method as claimed in one of claims 1 to 5, wherein the lightning protection receptor (33) is connected to the connection piece (25) by a screw connection.

7. The method as claimed in one of claims 1 to 6, wherein a first access opening (39) to the lightning protection cable (24) is made through the outer skin (38) of the rotor blade (17).

8. The method as claimed in claim 7, wherein a second access opening (40) to the lightning protection cable (24) is made through the outer skin (38) of the rotor blade (17), so that the lightning protection cable (24) is accessible from a second side.

9. The method as claimed in claim 7 or 8, wherein the first access opening (39) and/or the second access opening (40) are closed again after the connection piece (25) and the lightning protection receptor (33) are fitted.

10. The method as claimed in claim 9, wherein the lightning protection receptor (33) extends through the re-closed outer skin (38) of the rotor blade (17).

11. The method as claimed in one of claims 1 to 10, wherein the method is carried out as a repair method.

12. The method as claimed in one of claims 1 to 10, wherein the method is carried out as an upgrading method.

13. A rotor blade of a wind turbine, in which rotor blade a connection piece (25) and a lightning protection receptor (33) are fitted to a cable section (24), which is stripped of insulation along the extent of a lightning protection cable (19), so that the lightning protection receptor (33) is electrically coupled to the lightning protection cable (19), where the lightning protection receptor (33) extends through a region, which is subsequently closed, in the outer skin (38) of the rotor blade (17), **characterized in that** the connection piece (25) comprises a first shell part (26) and a second shell part (27), which shell parts are separate from one another before assembly and enclose the cable section (24) which is stripped of insulation between them in the assembled state, that the connection piece is configured such that its extent along the lightning protection cable corresponds at least to the length of the cable section which is stripped of insulation, and that the connection piece is arranged such that it completely covers the cable section which is stripped of insulation.

## Revendications

1. Procédé de mise à niveau d'un dispositif de protection contre la foudre d'une pale de rotor (17) d'un aérogénérateur, avec lequel une portion de câble (24) est dénudée le long de l'extension d'un câble de protection contre la foudre (19) et avec lequel une pièce de raccordement (25) et un récepteur de protection contre la foudre (33) sont montés sur la portion de câble (24) dénudée, de sorte que le récepteur de protection contre la foudre (33) est couplé électriquement au câble de protection contre la foudre (19), **caractérisé en ce que** la pièce de raccordement (25) comporte une première partie de coque (26) et une deuxième partie de coque (27) qui se présentent séparément l'une de l'autre avant le montage et qui, dans l'état monté, englobent la portion de câble (24) dénudée entre elles, **en ce que** la pièce de raccordement est configurée de telle sorte que son extension le long du câble de protection contre la foudre correspond au moins à la longueur de la portion de câble dénudée et **en ce que** la pièce de raccordement est disposée de telle sorte qu'elle recouvre entièrement la portion de câble dénudée.

2. Procédé selon la revendication 1, **caractérisé en ce que** le câble de protection contre la foudre (19) s'étend à l'intérieur de la pale de rotor (17).

3. Procédé selon la revendication 1 ou 2, **caractérisé en ce que** la portion de câble (24) dénudée s'étend sur une longueur comprise entre 4 cm et 10 cm.

4. Procédé selon l'une des revendications 1 à 3, **caractérisé en ce que** la pièce de raccordement (25) s'étend le long du câble de protection contre la foudre (19) sur une longueur qui est supérieure d'au moins 5 %, de préférence d'au moins 10 %, encore de préférence d'au moins 20 % à la longueur de la portion de câble (24) dénudée.

5. Procédé selon l'une des revendications 1 à 4, **caractérisé en ce que** la pièce de raccordement (25) comprend une âme (28) électriquement conductrice et une enveloppe (29) électriquement isolante.

6. Procédé selon l'une des revendications 1 à 5, **caractérisé en ce que** le récepteur de protection contre la foudre (33) est relié à la pièce de raccordement (25) par un assemblage vissé.

7. Procédé selon l'une des revendications 1 à 6, **caractérisé en ce qu'**une première ouverture d'accès (39) vers le câble de protection contre la foudre (24) est ménagée à travers l'enveloppe extérieure (38) de la pale de rotor (17).

8. Procédé selon la revendication 7, **caractérisé en ce qu'**une deuxième ouverture d'accès (40) vers le câble de protection contre la foudre (24) est ménagée à travers l'enveloppe extérieure (38) de la pale de rotor (17), de telle sorte que le câble de protection contre la foudre (24) devient accessible à partir d'un deuxième côté.

9. Procédé selon la revendication 7 ou 8, **caractérisé en ce que** la première ouverture d'accès (39) et/ou la deuxième ouverture d'accès (40) sont refermées après la mise en place de la pièce de raccordement (25) et du récepteur de protection contre la foudre (33).

10. Procédé selon la revendication 9, **caractérisé en ce que** le récepteur de protection contre la foudre (33) s'étend à travers l'enveloppe extérieure (38) refermée de la pale de rotor (17).

11. Procédé selon l'une des revendications 1 à 10, **caractérisé en ce que** le procédé est mis en œuvre en tant que procédé de réparation.

12. Procédé selon l'une des revendications 1 à 10, **caractérisé en ce que** le procédé est mis en œuvre en tant que procédé de renforcement.

13. Pale de rotor d'un aérogénérateur, avec laquelle une pièce de raccordement (25) et un récepteur de protection contre la foudre (33) sont montés sur une portion de câble (24) dénudée le long de l'extension d'un câble de protection contre la foudre (19), de sorte que le récepteur de protection contre la foudre (33) est couplé électriquement au câble de protection contre la foudre (19), le récepteur de protection contre la foudre (33) s'étendant à travers une zone fermée ultérieurement dans l'enveloppe extérieure (38) de la pale de rotor (17), **caractérisée en ce que** la pièce de raccordement (25) comporte une première partie de coque (26) et une deuxième partie de coque (27) qui se présentent séparément l'une de l'autre avant le montage et qui, dans l'état monté, englobent la portion de câble (24) dénudée entre elles, **en ce que** la pièce de raccordement est configurée de telle sorte que son extension le long du câble de protection contre la foudre correspond au moins à la longueur de la portion de câble dénudée et **en ce que** la pièce de raccordement est disposée de telle sorte qu'elle recouvre entièrement la portion de câble dénudée.
